(19) Europäisches Patentamt
European Patent Office
Office européen des brevets

(11) Veröffentlichungsnummer: **0 158 930 B1**

# (12) EUROPÄISCHE PATENTSCHRIFT

(45) Veröffentlichungstag der Patentschrift: **11.03.92**

(51) Int. Cl.⁵: **G05D 23/19**, F16K 31/00

(21) Anmeldenummer: **85104043.6**

(22) Anmeldetag: **03.04.85**

(54) Vorrichtung zur Steuerung des Durchflusses einer Flüssigkeit.

(30) Priorität: **17.04.84 DE 3414481**

(43) Veröffentlichungstag der Anmeldung:
**23.10.85 Patentblatt 85/43**

(45) Bekanntmachung des Hinweises auf die
Patenterteilung:
**11.03.92 Patentblatt 92/11**

(84) Benannte Vertragsstaaten:
**AT BE CH DE FR GB IT LI NL SE**

(56) Entgegenhaltungen:
**EP-A- 0 068 478**
**DE-A- 2 806 947**
**US-A- 3 322 342**
**US-A- 3 759 244**
**US-A- 3 980 996**

(73) Patentinhaber: **Hans Grohe GmbH & Co KG**
**Postfach 45**
**W-7622 Schiltach(DE)**

(72) Erfinder: **Buzzi, Günter**
**Am Häberlesberg 11**
**W-7622 Schiltach(DE)**

(74) Vertreter: **Patentanwälte RUFF, BEIER und**
**SCHÖNDORF**
**Neckarstrasse 50**
**W-7000 Stuttgart 1(DE)**

EP 0 158 930 B1

**Beschreibung**

Die Erfindung betrifft ein Mischventil nach dem Oberbegriff des Anspruchs 1.

Zur Temperaturregelung sind Heizkörperthermostate bekannt. Diese enthalten beispielsweise einen mit einer Ausdehnungsflüssigkeit gefüllten Wärmefühler, der mit dem Heizkörperventil verbunden ist. Bei stärkerer Ausdehnung der Ausdehnungsflüssigkeit wird auf das Ventil eingewirkt, so daß dieses den Durchfluß des Warmwassers verringert. Dadurch wird indirekt eine Temperaturregelung ermöglicht. Bei Vorrichtungen dieser Art kann zwar die zu regelnde Temperatur eingestellt werden, weitere Eingriffe sind jedoch nicht möglich (EP-A1-68 478).

Weiterhin bekannt ist ein Mischventil, das einen elektrischen Ventilantrieb aufweist (US-A-33 22 342). Die Spannungsversorgung für den elektrischen Ventilantrieb erfolgt aus dem Netz. Das Mischventil ist ein Regelventil, bei dem ein die Temperatur des ausfließenden Wassers messender Temperaturfühler den elektrischen Widerstand einer Brücke und dadurch die Stellung des Ventilantriebs beeinflußt.

Ebenfalls bekannt ist eine Heizeinrichtung für Lastkraftwagen, (US-A-37 59 244), bei der ein Wärmetauscher mit Thermoelementen verwendet wird. Die Thermoelemente werden auf ihrer einen Seite durch heiße Verbrennungsgase erhitzt und auf ihrer anderen Seite durch die zu erhitzende Luft gekühlt. Das Thermoelelement wird dazu verwendet, Spannung zum Aufladen einer Batterie zu liefern, die für den Betrieb der Heizeinrichtung erforderlich ist.

Der Erfindung liegt die Aufgabe zugrunde, ein Mischventil zu schaffen, mit dessen Hilfe es möglich ist, eine optimale Regelung bzw. Steuerung der Temperatur zu ermöglichen, wobei die Vorrichtung ohne Hilfsenergie betreibbar sein soll.

Zur Lösung dieser Aufgabe schlägt die Erfindung ein Mischventil nach dem Anspruch 1 oder 2 vor. Das Ventil bezieht also seine gesamte zu seinem Betrieb erforderliche Energie aus einem Thermoelement, so daß keine Fremdversorgung, etwa über ein Leitungsnetz oder über eine Batterie, erforderlich ist. Dadurch wird es möglich, das Ventil unmittelbar überall dort anzubringen, wo es benötigt wird. Es bedarf keiner dauernden Wartung, da keine Batterien ausgetauscht werden müssen.

In der Praxis wird eine Verwendung mehrerer Thermoelemente bevorzugt, um die notwendigen Betriebsspannungen zu erhalten. Im folgenden wird jedoch immer von einem Thermoelement gesprochen, ohne im einzelnen näher darauf einzugehen, daß es sich auch um eine Anordnung mehrerer zusammengeschalteter Thermoelemente handeln kann.

Die Erfindung sieht ebenfalls vor, daß das Ventil eine elektronische Steuereinheit aufweisen kann, in der die zur Betätigung des Ventilantriebs erforderlichen Signale erzeugt und über mindestens einen mit dem Ventilantrieb verbundenen Steuerausgang an diesen angelegt werden. Mit Hilfe dieser elektronischen Steuereinheit lassen sich alle gewünschten Parameter bei der Durchflußsteuerung bzw. Regelung berücksichtigen. So kann beispielsweise die Temperatur oder Durchflußmenge in der Steuereinheit eingestellt sein. Es ist ebenfalls möglich, eine Zeitschaltuhr in der Steuereinheit vorzusehen, die ein zeitgesteuertes Betätigen des Ventilantriebs ermöglicht.

In weiterer Ausbildung kann vorgesehen sein, daß die elektronische Steuereinheit mindestens einen Steuereingang aufweist. Bei einer Temperatursteuerung oder Regelung kann hier ein Temperaturfühler angeschlossen werden, der die Isttemperatur misst. Natürlich kann auch ein Druckfühler oder ein Fühler für eine sonstige Messgröße angeschlossen werden.

Die eigentliche Elektronik in der Steuereinheit kann analog arbeiten oder auch als digitale Steuerelektronik ausgebildet sein. Hierzu bietet sich ebenfalls die Anwendung eines Mikroprozessors an, mit dessen Hilfe die Verarbeitung der unterschiedlichsten Parametern erleichtert wird.

Falls bei längerem Nichtgebrauch des Ventils die Flüssigkeit auf Umgebungstemperatur abgekühlt ist und das Thermoelement daher keine Spannung liefert, kann bei Wiederinbetriebnahme vorgesehen sein, daß zunächst die Flüssigkeit ungehindert durchströmt. Da sie dann bald wieder höhere Temperatur erreicht, liefert das Thermoelement nach kurzer Zeit Spannung, so daß der Ventilantrieb betätigt werden kann. Besonders günstig ist es jedoch, wenn in Weiterbildung der Erfindung die Vorrichtung zur Pufferung der Energie einen Akkumulator oder eine wiederaufladbare Batterie aufweist. In diesem Fall braucht die Flüssigkeit bei Inbetriebnahme nicht zunächst voll durchgelassen zu werden, sondern es kann zum Betrieb des Ventilantriebes die in dem Akkumulator enthaltene Energie verwendet werden.

Soll das Ventil in Fällen angewendet werden, wo die Temperatur des Wassers höher liegt als die Umgebungstemperatur, kann erfindungsgemäß vorgesehen sein, daß das Thermoelement als eine Hülse ausgebildet ist, die ein von der Flüssigkeit durchflossenes Rohr umgibt und an ihrer Außenseite mit Kühlrippen versehen ist. In diesem Fall liegt dann die eine, nämlich die warme, Seite des Thermoelementes an dem Rohr, während die andere, die kalte Seite, des Thermoelementes mit den Kühlrippen versehen ist, so daß diese Seite der Umgebungstemperatur, beispielsweise der Lufttemperatur ausgesetzt ist, oder mit einem anderen kalten Medium verbunden wird.

Thermoelemente bestehen im einfachsten Fall aus zwei Leitern unterschiedlicher Austrittsarbeit, die an zwei Stellen miteinander verlötet sind. Die eine Lötstelle nennt man die eine Seite des Thermoelementes, während die andere Lötstelle die andere Seite des Thermoelementes genannt wird. In diesem Sinne werden die im Folgenden verwendeten Ausdrücke gebraucht.

Die Erfindung schlägt weiterhin vor, daß das Thermoelement mit seiner einen Seite mit einem das Wasser führenden Durchflußrohr in Verbindung steht und an seiner anderen Seite Kühlrippen aufweist. Mit Hilfe dieser Kühlrippen ist also die eine Seite des Thermoelementes der Umgebungstemperatur ausgesetzt. Bei dem von der Erfindung vorgeschlagenen Ventil wird das Thermoelement nur zur Energieversorgung benötigt. Es ist daher im Prinzip gleichgültig, ob die Temperatur der Flüssigkeit höher oder niedriger als die Umgebungstemperatur liegt.

Es kann nach der Erfindung mit Vorteil vorgesehen sein, daß die eine Seite des Thermoelementes der Temperatur der wärmeren und die andere Seite der Temperatur der kälteren Flüssigkeit ausgesetzt ist. Dabei kann es sich sowohl um die Steuerung bzw. Regelung zweier unterschiedlicher Flüssigkeiten, sofern diese mischbar sind, als auch mit Vorteil um die Steuerung bzw. Regelung der gleichen Flüssigkeit handeln.

In Weiterbildung kann vorgesehen sein, daß zur Steuerung bzw. Regelung des Durchflusses, insbesondere des Mischungsverhältnisses, von kalter und warmer Flüssigkeit das Thermoelement in dem Ventilgehäuse derart angeordnet ist, daß es mit seiner kalten Seite der kalten Flüssigkeit und mit seiner warmen Seite der warmen Flüssigkeit ausgesetzt ist. Auf diese Weise läßt sich das Ventil als eine einzige Einheit bauen, die sowohl den Ventilantrieb als auch das Thermoelement enthält. Dadurch wird es bei der Installation einer derartigen Vorrichtung, beispielsweise als sanitäres Mischventil, möglich, daß die Installation nur von dem für Wasserleitungen zuständigen Installateur durchgeführt wird, ohne daß es erforderlich ist, einen zweiten Fachmann, nämlich den Elektriker, hinzuzuziehen. Dies ist insbesondere wichtig z. B. in Bädern, in denen aufgrund der Feuchtigkeit besondere Bestimmungen gelten.

Die Erfindung sieht ebenfalls vor, daß das Ventilgehäuse den Ventilantrieb und das Thermoelement enthält. Vorzugsweise kann das Ventilgehäuse die elektronische Steuereinheit enthalten. Auch in diesem Fall ist dafür gesorgt, daß das Ventilgehäuse als eine Einheit gehandelt und installiert werden kann. Es ist natürlich auch denkbar, mit Hilfe eines Steckers eine Verbindung zu der Steuereinheit über eine Leitung herzustellen, was in diesem Fall auch ungefährlich möglich wäre, da die von dem Thermoelement gelieferten Spannungen sehr niedrig sind.

Wenn das Ventilgehäuse eine Flüssigkeitsführung für die kalte Flüssigkeit und eine Flüssigkeitsführung für die warme Flüssigkeit aufweist, kann in Weiterbildung der Erfindung vorgesehen sein, daß die beiden Flüssigkeitsführungen mindestens teilweise von einer Trennwand getrennt werden, die das Thermoelement enthält. Besonders günstig ist es, wenn die Trennwand als Thermoelement ausgebildet ist.

Besonders günstig ist die Anwendung der von der Erfindung vorgeschlagenen Maßnahmen dann, wenn es sich um ein Mischventil mit einer Temperaturregelung Wasser handelt. In diesem Fall spielt die Tatsache, daß das Ventilgehäuse einschl. des Thermoelementes, des Ventilantriebes und der elektronischen Steuereinheit eine in sich geschlossene und für sich installierbare Einheit bildet, eine besondere Rolle. Das Gerät braucht nur vom Wasserinstallateur an die Wasserleitung angeschlossen werden, ohne daß ein Elektriker hinzugezogen werden muß. Sämtliche Sicherheitsvorschriften bezüglich der Nassräume sind dadurch erfüllt, daß alle elektrischen bzw. elektronischen Elemente in dem Gehäuse integriert sind und mit Sicherheitskleinspannung betrieben werden.

Bei der Temperaturregelung bzw. Steuerung mit Hilfe von Flüssigkeit bei zwei unterschiedlichen Temperaturen ist erfindungsgemäß vorgesehen, daß in jedem Zulauf und im Auslauf je ein Temperaturfühler angeordnet ist. Es würde an sich ausreichen, nur im Auslauf einen Temperaturfühler anzuordnen, um eine Regelung zu ermöglichen. Diese Regelung würde jedoch unter Umständen nicht optimal arbeiten und könnte zu einem Schwingen führen. Da die elektronische Steuereinheit jedoch in der Lage ist, die unterschiedlichsten Eingangsgrößen zu verarbeiten, kann sie in diesem Fall aufgrund der unterschiedlichen Zulauftemperaturen die gewünschte Auslauftemperatur besonders günstig, schnell und energiesparend einstellen.

Diese Möglichkeit wird noch dadurch verbessert, daß in jedem Zulauf ein Druckfühler angeordnet ist. In diesem Fall kann die elektronische Steuereinheit auch noch die unterschiedlichen Drücke von Warmwasser- bzw. Kaltwasserzulauf berücksichtigen.

Die Erfindung schlägt weiterhin vor, daß die elektronische Steuereinheit mindestens einen zusätzlichen Steuereingang aufweisen kann. Hierbei kann es sich beispielsweise um einen Eingang zur Berücksichtigung des Druckes handeln. Es ist jedoch auch möglich, daß mit dem zusätzlichen Steuereingang ein Temperaturfühler verbunden ist, der beispielsweise die Außentemperatur außerhalb des Hauses misst.

Die Erfindung sieht vor, daß die elektronische Steuereinheit eine von außen betätigbare Eingabeeinrichtung aufweisen kann. Im einfachsten Fall kann es sich um eine mit einem Potentiometer verbundene Drehspindel handeln, mit deren Hilfe die gewünschte Temperatur einstellbar ist. Es ist selbstverständlich auch möglich, mit Hilfe eines Tastenfeldes die gewünschte Temperatur digital einzugeben. In diesem Fall könnte die Tastatur auch dazu verwendet werden, beispielsweise eine Zeitdauer einzugeben. Falls die elektronische Steuereinheit einen Zähler bzw. eine Uhr aufweist, kann diese aufgrund der ihr zur Verfügung stehenden Messparameter beispielsweise auch dafür sorgen, daß eine Badewanne nicht überläuft. Sie kennt aufgrund der Drucksensoren den in den Zuleitungen herrschenden Druck und kann aufgrund der geometrischen Eigenschaften des Ventilgehäuses und der jeweils vorhandenen Ventilöffnungsstellung berechnen, welche Flüssigkeitsmenge pro Zeiteinheit aus dem Auslauf strömt. Bei einer bekannten Badewannengröße kann sie also berechnen, zu welchem Zeitpunkt sie das Ventil wieder schließen muß, damit die Badewanne nicht überläuft.

Die Erfindung sieht ebenfalls vor, daß die elektronische Steuereinheit mindestens einen zusätzlichen Steuerausgang aufweist. Dieser zusätzliche Steuerausgang kann beispielsweise zur Temperaturanzeige verwendet werden. Sie kann auch als Warnsignal dienen, wenn beispielsweise die Temperatur in einer Richtung überschritten wird. Ebenfalls möglich ist eine Wasserverbrauchsanzeige oder sogar eine Energieverbrauchsanzeige.

Die elektronische Steuereinheit kann auch so eingestellt sein oder eingestellt werden, daß sie eine maximale Temperatur der Flüssigkeit an ihrem Auslauf auch bei Fehlbedienung nicht überschreitet, was als Kindersicherung verwendet werden kann.

Es wäre ebenfalls möglich, beispielsweise eine automatische Umstellung auf die Handbrause durchzuführen, wenn diese aus dem Halter entnommen wird.

Weitere Merkmale, Einzelheiten und Vorzüge der Erfindung ergeben sich aus den Ansprüchen, der folgenden Beschreibung einer bevorzugten Ausführungsform sowie anhand der Zeichnung. Hierbei zeigen:

Fig. 1    Schematisch ein Blockschaltbild der Komponenten der von der Erfindung vorgeschlagenen Vorrichtung;

Fig. 2    einen Längsschnitt durch ein als Hülse ausgebildetes und auf ein Flüssigkeit führendes Rohr aufgeschobenes Thermoelement;

Fig. 3    einen Längsschnitt durch eine erste Ausführungsform eines Mischventils;

Fig. 4    eine zweite Ausführungsform eines Mischventils.

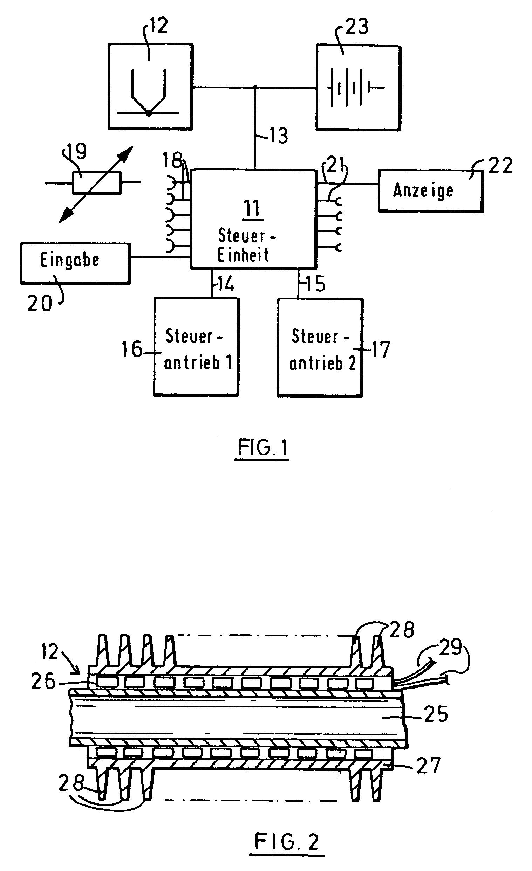

Zentrales Element des Blockschaltbildes nach Fig. 1 ist die elektronische Steuereinheit 11, die von einem Thermoelement 12 über eine Versorgungsleitung 13 mit Energie versorgt wird. Die Steuereinheit erzeugt die zum Betrieb eines Ventilantriebes erforderlichen Signale und führt sie im dargestellten Ausführungsbeispiel über zwei Steuerleitungen 14 und 15 je einem elektromechanischen Steuerantrieb 16, 17 zu. Beide Steuerantriebe können beispielsweise Elektromotoren sein.

An seiner in Fig. 1 linken Seite enthält die elektronische Steuereinheit 11 insgesamt fünf Steuereingänge 18, an deren einen ein symbolisch dargestellter Temperaturfühler 19 angeschlossen ist. Mit Hilfe des Temperaturfühlers 19 wird beispielsweise die Isttemperatur des Ausganges eines Mischventils gemessen.

Ebenfalls auf der linken Seite in Fig. 1 ist eine schematisch dargestellte Eingabeeinrichtung 20 dargestellt, mit deren Hilfe im einfachsten Fall die Solltemperatur eingestellt werden kann. Die Eingabeeinrichtung 20 kann auch ein Tastenfeld sein, mit dessen Hilfe die unterschiedlichsten Sollwerte eingestellt werden können.

An ihrer in Fig. 1 rechten Seite enthält die elektronische Steuereinheit 11 insgesamt fünf Steuerausgänge 21, von denen der eine mit einer Anzeige 22 verbunden ist. An dieser Anzeige 22 kann beispielsweise die Isttemperatur abgelesen werden, oder aber auch die Solltemperatur.

Damit für den Fall, daß kurzzeitig das Thermoelement 12 keine Spannung abgibt, die Steuereinheit 11 dennoch arbeiten kann, ist an der Versorgungsleitung 13 eine wiederaufladbare Batterie 23 zusätzlich angeschlossen. Die Batterie wird dann aufgeladen, wenn das Thermoelement 12 Spannung abgibt. Zur Verhinderung des Rückfließens von Strom aus der Batterie 23 zu dem Thermoelement 12 können im Einzelnen nicht dargestellte Einrichtungen vorgesehen sein, beispielsweise Dioden

Die von der Erfindung vorgeschlagene in Fig. 1 dargestellte Vorrichtung arbeitet folgendermaßen. Die Steuereinheit erhält ihre Spannungsversorgung von dem Thermoelement 12, gegebenenfalls unterstützt von der Batterie 23. An der Eingabeeinrichtung 20 werden die Sollwerte eingegeben. Aufgrund der durch den Temperaturfühler 19 zur Verfügung gestellten Angaben über die Isttemperatur und der mit Hilfe der Eingabe einrichtung 20 eingegebenen Sollwerte berechnet die Steuereinheit 11 die Signale, die über die Steuerleitungen 14 und 15 an die beiden Steuerantriebe 16 und 17 abgegeben werden müssen, damit der Sollwert erreicht wird. Sobald sich die vom Temperaturfühler 19 gelieferten Werte ändern, wird dementsprechend auch die Information an die beiden Steuerantriebe 16 und 17 geändert.

Die Steuereinheit 11 kann entweder eine analoge oder eine digitale Elektronik enthalten, im letzten Fall enthält sie vorzugsweise einen Mikroprozessor.

Gleichzeitig werden an der Anzeigeeinrichtung 22 die gewünschten Anzeigen zur Verfügung gestellt, beispielsweise die Isttemperatur, oder auch die Abweichung von Ist- und Solltemperatur.

Auf den weiteren Steuerausgängen 21 können andere Signale abgegeben werden, beispielsweise auch akustische Angaben.

Fig. 2 zeigt ein Ausführungsbeispiel für ein tatsächlich verwendbares Thermoelement 12. Bei dem Ausführungsbeispiel nach Fig. 2 fließt eine Flüssigkeit durch ein Rohr 25, wobei die Flüssigkeit eine von der Temperatur der Umgebung unterschiedliche Temperatur aufweist. Das Thermoelement 12 ist als Hülse 26 ausgebildet, die auf das Rohr 25 aufgeschoben ist. Mit ihrer Innenseite umgibt die Hülse 26 das Rohr 25, wobei die Innenseite der Hülse 26 die warme Seite des Thermoelementes darstellt. An der Außenseite der Hülse 26 ist wiederum eine zylindrische Hülse 27 angeordnet, die auf ihrer Außenseite mit Kühlrippen 28 versehen ist. Die Kühlrippen 28 liegen etwa in senkrecht zur Längsachse der Hülse 26 verlaufenden Ebenen und verjüngen sich im Querschnitt nach außen etwas. Von den mehreren Kühlrippen 28 sind in Fig. 2 nur einige dargestellt. Durch die Kühlrippen wird die Außenoberfläche der zylindrischen Hülse 27 vergrößert, so daß die äußere Seite der Thermoelementhülse 26 etwa auf der Umgebungstemperatur gehalten wird. Aufgrund des Temperaturunterschiedes zwischen der Außenseite der Hülse 26 und der Innenseite, die der Temperatur des Rohres 25 entspricht, gibt das durch die Hülse 26 gebildete Thermoelement 12 eine Spannung ab, die mit Hilfe von Anschlußleitungen 29 abgenommen und über die Versorgungsleitung 13 der Steuereinheit 11 zugeführt werden kann. Die Ausführungsform des Thermoelementes nach Fig. 2 eignet sich insbesondere in den Fällen, in denen der Durchfluss nur einer Flüssigkeit mit einer gegenüber der Umgebungstemperatur unterschiedlichen Temperatur geregelt bzw. gesteuert werden soll. Als Beispiel für die Ausführungsform nach Fig. 2 kann ein Thermostatventil für einen Warmwasserheizkörper genannt werden.

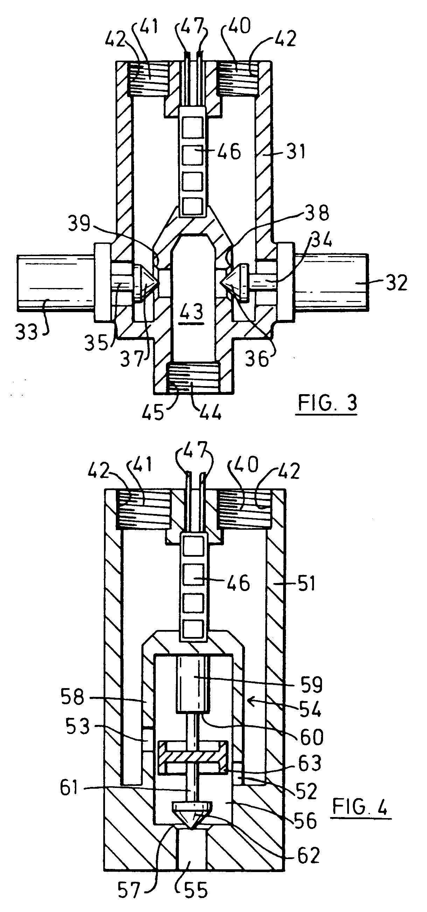

Fig. 3 zeigt nun ein Mischventil insbesondere für sanitäre Zwecke. Das Mischventil enthält ein Ventilgehäuse 31, an dessen in Fig. 3 rechter und linker Seite je ein elektromechanischer Ventilantrieb 32 und 33 angebracht ist. Beide Ventilantriebe sind beispielsweise Elektromotoren, die mechanisch über einen Stößel 34, 35 auf einen Ventilkegel 36, 37 einwirken. Beide Ventilkegel befinden sich je einem der Kegelform des Ventilkegels entsprechenden Ventilsitz 38, 39 gegenüber. Je weiter der jeweilige Stößel 34, 35 von dem Elektromotor ausgefahren wird, desto geringer wird der Durchlass zwischen dem Ventilsitz und dem zugehörigen Ventilkegel. Dadurch wird also der Durchlass durch das Ventil gesteuert.

Das Ventilgehäuse 31 besitzt zwei Zuleitungen 40, 41 für Wasser. Die eine der beiden Zuleitungen dient der Zufuhr von kaltem Wasser, während die andere der Zufuhr von warmen Wasser dient. Beide Zuleitungen 40, 41 besitzen in ihrem kreiszylindrischen oberen Bereich je ein Innengewinde 42, in dem eine Zuleitung eingeschraubt werden kann.

Die Zuleitung 40 führt zu dem aus dem Ventilkegel 36 und dem Ventilsitz 38 gebildeten Ventil, während die Zuleitung 41 zu dem aus dem Kegel 37 und dem Ventilsitz 39 gebildeten Ventil führt. Beide derart gebildeten Ventile führen in einen gemeinsamen in Längsrichtung des Ventils verlaufenden Kanal 43, der in den Wasserauslauf 44 des Ventilgehäuses 31 übergeht. Der Wasserauslauf 44 besitzt ebenfalls ein Innengewinde 45 zum Anschluß einer Leitung oder eines Auslaufes.

Der von der Zuleitung 40 zum Ventil führende Raum ist von dem von der Zuleitung 41 zum Ventil führenden Raum durch ein Thermoelement 46 getrennt, das damit die Trennwand zwischen den beiden Wasserführungen bildet. Das Thermoelement 46 ist derart ausgebildet und angeordnet, daß seine eine Seite mit der durch die Zuleitung 41 fließenden Flüssigkeit in Verbindung steht, während die andere Seite des Thermoelementes 46 mit der durch die Zuleitung 40 strömenden Flüssigkeit in Verbindung steht. Wenn beide Flüssigkeiten unterschiedliche Temperaturen aufweisen, erzeugt das Thermoelement 46 dadurch eine Spannung, die über die beiden Leitungen 47 an der Oberseite des Ventilgehäuses 31 entnommen werden können. Aus Gründen der Vereinfachung ist in Fig. 3 die Leitungsverbindung zwischen dem Thermoelement 46, der nicht dargestellten elektronischen Steuereinheit 11 und den beiden Ventilantrieben 32 und 33 nicht dargestellt.

Bei der in Fig. 4 dargestellten Ausführungsform eines Mischventils sitzt das Gehäuse 51 zylindrische Form. An seiner Oberseite weist es einen Zulauf 40 für kaltes und einen Zulauf 41 für warmes Wasser auf. Beide Zuläufe besitzen wiederum ein Innengewinde 42 zum Anschrauben einer Leitung oder dgl. Der Zulauf 40 für kaltes Wasser führt zu einer Ventilöffnung 52, während der Zulauf 41 für warmes Wasser zu einer zweiten ebenfalls radial angeordneten Ventilöffnung 53 führt, die näher am in Fig. 4 oberen Ende des Ventilgehäuses 51 angeordnet ist als die erste Ventilöffnung 52.

Zwischen den beiden Wasserführungen ist als Trennwand wiederum ein Thermoelement 46 angeordnet, das mit seiner einen Seite der Temperatur des wärmeren Wassers und mit seiner anderen Seite der Temperatur des kälteren Wassers ausgesetzt ist.

Unterhalb des Thermoelemtes 46 ist im Ventilgehäuse 51 ein Hohlzylinder 54 angeordnet, der an seiner Oberseite eine Halterung für das Thermoelement 46 bildet und an seiner Unterseite einstückig in das Ventilgehäuse 51 übergeht. An dieser Stelle besitzt das Ventilgehäuse 51 eine in Längsrichtung verlaufende Bohrung 55, die beim Übergang in den Innenraum 56 des Hohlzylinders 54 einen mit einer Phase versehenen den Ventilsitz 57 bildenden Rand aufweist.

Die beiden Ventilöffnungen 52 und 53 sind in der Mantelwand 58 des Hohlzylinders 54 angeordnet.

Am oberen Ende des Hohlzylinders 54 ist in dessen Innenraum mittig ein Ventilantrieb 59 angeordnet, der beispielsweise ein Elektromotor sein kann. An seiner Unterseite 60 ragt aus dem Ventilantrieb 59 ein Stößel 61 heraus, der mehr oder weniger weit nach oben und unten mit Hilfe des Ventilantriebes 59 verschoben werden kann. An seinem in Fig. 4 unteren Ende weist der Stößel 61 einen Ventilkegel 62 auf, der mit dem Ventilsitz 57 zusammenwirkend ein Ventil mit veränderbarem Durchlass bildet.

Der Stößel 61 weist darüber hinaus im Bereich etwa der Mitte seiner Länge einen Schieberkörper 63 auf, der im Querschnitt die Form eines H aufweist und mindestens teilweise rotationssymmetrisch um die Längsachse des Stößels 61 ausgebildet ist. Bei Verschieben des Stößels 61 gleitet der Schieberkörper 63 in Längsrichtung des Ventilgehäuses und verschließt dabei mehr oder weniger stark die Ventilöffnung 53 oder 52.

Es kann durch die Verschiebung des Stößels 61 und des damit verbundenen Schieberkörpers 63 also eine Mischung der durch die Ventilöffnung 52 strömenden Flüssigkeit mit der durch die Ventilöffnung 53 strömenden Flüssigkeit bewirkt werden, wobei gleichzeitig der Ventilkegel 62 im Zusammenwirken mit dem Ventilsitz 57 ein mehr oder weniger starkes Verschließen des Ausgangsventils bewirkt.

Wiederum sind bei der Ausführungsform nach Fig. 4 die Leitungen zu der elektronischen Steuereinheit 11 nicht dargestellt.

Der Anwendungsbereich der Erfindung wurde in der vorliegenden Anmeldung detailliert für Mischventile, sanitäre Mischventile und Thermostatventile geschildert. Dies ist ein besonders günstiger Anwendungsfall für die Erfindung. Es ist jedoch auch möglich, die Erfindung prinzipiell überall dort anzuwenden, wo zweierlei Temperaturpotentiale vorhanden sind und wo eine Ventilsteuerung- oder Regelung ohne Fremdenergie durchgeführt werden soll. In diesem Fall läßt sich die zur Durchführung der Vorgänge erforderliche Energie mit Hilfe der Thermoelemente gewinnen, wobei ggf. eine Pufferung für die gelieferte Energie mit Hilfe eines Akkumulators vorhanden sein kann.

Beispielsweise ist die Erfindung bei der Fernheiztechnik anwendbar.

Unter bestimmten Umständen kann die von der Erfindung vorgeschlagene technische Lösung auch bei bestimmten Solaranlagen verwendet werden, vor allem zu Steueraufgaben in den Zeiten, wenn zwar kein Licht vorhanden ist, jedoch gespeicherte Wärmeenergie in Form von aufgeheiztem Wasser vorhanden ist und gesteuert werden soll.

Die Verwendung von Peltier-Elementen wird von der Erfindung besonders bevorzugt. Diese liefern hohe Ströme bei kleiner Spannung.

**Patentansprüche**

1. Mischventil, insbesondere für sanitäre Zwecke, mit einem Ventilgehäuse (31, 51) mit je einem Zulauf (40, 41) für kaltes und warmes Wasser, je einem in dem Ventilgehäuse (31, 51) angeordneten Ventil mit veränderbarem Durchfluß für das kalte und für das warme Wasser, je einem elektrischen Ventilantrieb (16, 17) für jedes Ventil zur Veränderung seines Durchflusses sowie einer Steuereinheit (11), die die zum Betrieb des Ventilantriebs (16, 17) erforderlichen Signale liefert, dadurch gekennzeichnet, daß in dem Ventilgehäuse (31, 51) ein der Temperatur des warmen Wassers und einer von dieser verschiedenen Temperatur ausgesetztes Thermoelement (12, 26, 46) angeordnet ist, das über eine Versorgungsleitung (13) die Steuereinheit (11) und die Ventilantriebe (16, 17) mit Energie versorgt.

2. Mischventil, insbesondere für sanitäre Zwecke, mit einem Ventilgehäuse (31, 51) mit je einem Zulauf (40, 41) für kaltes und warmes Wasser, einem in dem Ventilgehäuse (31, 51) angeordneten Ventil mit veränderbarem Durchfluß für das kalte und für das warme Wasser, einem elektrischen Ventilantrieb (16, 17) für das eine Ventil zur Veränderung seines Durchflusses sowie einer Steuereinheit (11), die die zum Betrieb des Ventilantriebs (16, 17) erforderlichen Signale liefert, dadurch gekennzeichnet, daß in dem Ventilgehäuse (31, 51) ein der Temperatur des warmen Wassers und einer von dieser verschiedenen Temperatur ausgesetztes Thermoelement (12,26, 46) angeordnet ist, das über eine Versorgungsleitung (13) die Steuereinheit (11) und den Ventilantrieb (16,17) mit Energie versorgt.

3. Ventil nach Anspruch 1 oder 2, dadurch gekennzeichnet, daß es eine Temperaturregelung aufweist und in jedem Zulauf (40, 41) des Ventilgehäuses und im Auslauf (44) je ein Temperaturfühler (19) angeordnet ist.

4. Ventil nach Anspruch 1 oder 2, dadurch gekennzeichnet, daß in jedem Zulauf (40, 41) ein Druckfühler angeordnet ist.

5. Ventil nach einem der vorhergehenden Ansprüche, dadurch gekennzeichnet, daß es eine elektronische Steuereinheit (11), in der die zur Betätigung einer Steuer-, Regel- oder Anzeigeeinrichtung bzw. des Ventilantriebs erforderlichen Signale erzeugt und über mindestens einen mit der Steuer-, Regel- oder Anzeigeeinrichtung bzw. dem Ventilantrieb (16, 17) verbundenen Steuerausgang an diese bzw. diesen angelegt werden, mindestens einen Steuereingang (18), vorzugsweise eine von außen betätigbare Eingabeeinrichtung sowie zur Pufferung der von dem Thermoelement (12, 26, 46) erzeugten Energie einen Akkumulator oder eine wiederaufladbare Batterie (23) aufweist.

6. Ventil nach einem der vorhergehenden Ansprüche, dadurch gekennzeichnet, daß das Thermoelement (12, 26, 46) als eine ein von dem Wasser durchflossenes Rohr (25) umgebende Hülse, vorzugsweise mit Kühlrippen (28) an ihrer Außenseite ausgebildet ist, wobei das Thermoelement (12, 26, 46) mit seiner einen Seite mit dem Rohr (25) in Verbindung steht und mit seiner anderen Seite mit einem Medium unterschiedlicher Temperatur ggf. über die Kühlrippen (28) in Verbindung steht.

7. Ventil nach einem der vorhergehenden Ansprüche, dadurch gekennzeichnet, daß die eine Seite des Thermoelements (12, 26, 46) der Temperatur des warmen und die andere Seite der Temperatur des kalten Wassers ausgesetzt ist.

8. Ventil nach einem der vorhergehenden Ansprüche, dadurch gekennzeichnet, daß das Thermoelement (12, 26, 46) in dem Ventilgehäuse (31, 51) derart angeordnet ist, daß es mit seiner einen Seite dem kalten und mit seiner anderen Seite dem warmen Wasser ausgesetzt ist.

9. Ventil nach einem der vorhergehenden Ansprüche, dadurch gekennzeichnet, daß das Ventilgehäuse (31, 51) den Ventilantrieb (16, 17) und/oder das Thermoelement (12, 26, 46) und/oder die elektronische Steuereinheit (11) und/oder die Batterie (23) enthält.

10. Ventil nach einem der vorhergehenden Ansprüche, dadurch gekennzeichnet, daß das Ventilgehäuse (31, 51) eine die Flüssigkeitsführung für das kalte und für das warme Wasser mindestens bereichsweise trennende Trennwand aufweist, die das Thermoelement (12, 26, 46) enthält oder von ihm gebildet ist.

11. Ventil nach einem der vorhergehenden Ansprüche, dadurch gekennzeichnet, daß das Thermoelement (12, 26, 46) ein Peltierventil ist.

**Claims**

1. Mixing valve, particularly for sanitary purposes, with a valve casing (31,51) with in each case an intake (40,41) for cold and hot water, a valve arranged in the valve casing (31,51) and having a variable flow for the cold and for the hot water, an electric valve gear (16,17) for each valve for modifying its flow, as well as a control unit (11), which supplies the signals necessary for operating the valve gear (16,17), characterized in that the valve casing (31,51) contains a thermocouple (12,26,46) exposed to the temperature of the hot water and a temperature differing therefrom and which by means of a supply line (13) supplies with power the control unit (11) and the valve gears (16,17).

2. Mixing valve, particularly for sanitary purposes, with a valve casing (31,51) with in each case an intake (40,41) for cold and hot water, a valve arranged in the valve casing (31,51) and having a variable flow for the cold and for the hot water, an electric valve gear (16,17) for the valve for modifying its flow, as well as a control unit (11), which supplies the signals necessary for operating the valve gear (16,17), characterized in that the valve casing (31,51) contains a thermocouple (12,26,46) exposed to the temperature of the hot water and a temperature differing therefrom and which by means of a supply line (13) supplies with power the control unit (11) and the valve gear (16,17).

3. Valve according to claims 1 or 2, characterized in that it has a temperature control and a temperature sensor (19) is arranged in each intake (40,41) of the valve casing and in the outlet (44).

4. Valve according to claims 1 or 2, characterized in that a pressure sensor is placed in each intake (40,41).

5. Valve according to one of the preceding claims, characterized in that it has an electronic control unit (11) in which are produced the signals necessary for operating a control, regulating or indicating device or the valve gear and are applied thereto by means of at least one control output connected to the control, regulating or indicating device or the valve gear (16,17), at least one control input (18), preferably an externally operable input device, as well as an accumulator or a rechargeable battery (23)for buffering the power produced by the thermocouple (12,26,46).

6. Valve according to one of the preceding claims, characterized in that the thermocouple (12,26,46) is constructed as a sleeve surrounded by a tube (25) through which flows the water, preferably having cooling fins (28) on its outside, the thermocouple (12,26,46) being connected by its one side to the tube (25) and with its other side to a medium at a different temperature, optionally via the cooling fins (28).

7. Valve according to one of the preceding claims, characterized in that one side of the thermocouple (12,26,46) is exposed to the temperature of the hot water and the other side to the temperature of the cold water.

8. Valve according to one of the preceding claims, characterized in that the thermocouple (12,26,46) is arranged in the valve casing (31,51) in such a way that its one side is exposed to the cold water and its other side to the hot water.

9. Valve according to one of the preceding claims, characterized in that the valve casing (31,51) contains the valve gear (16,17) and/or the thermocouple (12,26,46) and/or the electronic control unit (11) and/or the battery (23).

10. Valve according to one of the preceding claims, characterized in that the valve casing (31,51) has a partition at least zonally separating the liquid feed for the cold and for the hot water and which contains or is formed by the thermocouple (12,26,46).

11. Valve according to any one of the preceding claims, characterized in that the thermocouple (12,26,46) is a Peltier valve.

**Revendications**

1. Vanne mélangeuse, destinée en particulier à des buts sanitaires, comprenant un boîtier de vanne (31, 51) comportant deux entrées (40, 41) pour l'eau froide et l'eau chaude sur chacune, un obturateur à débit variable pour l'eau froide et l'eau chaude respectivement disposés dans le boîtier (31, 51) des moyens d'entraînement électrique (16, 17) associés aux obturateurs pour modifier leur débit ainsi qu'une unité de commande (11) qui envoie les signaux nécessaires pour l'actionnement des moyens d'entraînement (16, 17), caractérisée en ce qu'un thermoélément (12, 26, 46) est disposé dans le boîtier (31, 51), exposé à la température de l'eau chaude et à une température différente de celle-ci, qui alimente en énergie par une ligne d'alimentation (13) l'unité de commande (11) et les moyens d'entraînement (16, 17).

2. Vanne mélangeuse destinée en particulier à des buts sanitaires, comprenant un boîtier de vanne (31, 51) comportant deux entrées (40, 41) pour l'eau froide et l'eau chaude respectivement, un obturateur unique à débit variable, pour l'eau froide et l'eau chaude disposée dans le boîtier (31, 51), un moyen d'entraînement électrique (16, 17) associé à l'obturateur pour modifier son débit ainsi qu'une unité de commande (11) qui envoie les signaux nécessaires pour l'actionnement du moyen d'entraînement (16, 17), caractérisée en ce qu'un thermoélément (12, 26, 46) est disposé dans le boîtier (31, 51), exposé à la température de l'eau chaude et à une température différente de celle-ci, qui alimente en énergie par une ligne d'alimentation (13) l'unité de commande (11) et le moyen d'entraînement (16, 17).

3. Vanne selon l'une des revendications 1 ou 2, caractérisée en ce qu'elle comporte un réglage de température et en ce qu'un capteur de température (19) est disposé à chaque entrée (40, 41) du boîtier de vanne et à sa sortie (44).

4. Vanne selon la revendication 1 ou 2 caractérisée en ce qu'un détecteur de pression est disposé dans chaque entrée (40, 41).

5. Vanne selon l'une quelconque des revendications précédentes, caractérisée en ce qu'elle comprend une unité de commande électrique (11), dans laquelle les signaux nécessaires pour l'actionnement d'un dispositif de commande, de réglage ou d'affichage ou d'un moyen d'entraînement sont engendrés et appliqués à celui-ci ou ceux-ci à l'aide d'au moins une sortie de commande, reliée au dispositif de commande, de réglage ou d'affichage ou au moyen d'entraînement (16, 17), au moins une entrée de commande (18) de préférence un dispositif d'entrée de données actionnable de l'extérieur, ainsi qu'un accumulateur ou une batterie rechargeable (23) pour l'accumulation de l'énergie engendrée par le thermoélément (12, 26, 46).

6. Vanne selon l'une quelconque des revendications précédentes, caractérisée en ce que le thermoélément (12, 26, 46) est réalisé sous forme d'une douille qui entoure un tube (25) traversé par l'eau et comporte de préférence des nervures de refroidissement (28) sur son côté extérieur, le thermoélément (12, 26, 46) étant en liaison par son premier côté avec le tube (25) et par son autre côté avec un milieu à température différente, éventuellement par l'intermédiaire des rainures de refroidissement (28).

7. Vanne selon l'une quelconque des revendications précédentes, caractérisée en ce que le premier côté du thermoélément (12, 26, 46) est exposé à la température de l'eau chaude et son autre côté à la température de l'eau froide.

8. Vanne selon l'une quelconque des revendications précédentes, caractérisée en ce que ledit thermoélément (12, 26, 46) est disposé dans le boîtier (31, 51) d'une manière telle qu'il soit exposé par l'un de ses côtés à l'eau froide et par son autre côté à l'eau chaude.

9. Vanne selon l'une quelconque des revendications précédentes, caractérisée en ce que le boîtier (31, 51) contient le moyen d'entraînement (16, 17) et/ou le thermoélément (12, 26, 46) et/ou l'unité de commande électronique (11) et/ou la batterie (23).

10. Vanne selon l'une quelconque des revendications précédentes, caractérisée en ce que le boîtier (31, 51) contient une cloison de séparation qui assure au moins dans une zone, le guidage du liquide pour l'eau chaude et pour l'eau froide et qui contient le thermoélément (12, 26, 46) ou est constituée par lui.

11. Vanne selon l'une quelconque des revendications précédentes, caractérisée en ce que le thermoélément (12, 26, 46) est un obturateur à effet Peltier.

FIG.1

FIG.2

FIG. 3

FIG. 4